# EUROPEAN PATENT APPLICATION

(11) **EP 4 513 149 A1**
(43) Date of publication of application: **26.02.2025**
(21) Application number: 23192892.0
(22) Date of filing: 23.08.2023
(51) Int. Cl.: G01F 1/667

(54) **UTILITY METER WITH PRESSURE TRANSIENT DETECTION**

(71) Applicant: Kamstrup A/S, 8660 Skanderborg (DK)
(72) Inventor: Kristensen, Mick Althoff, 8660 Skanderborg (DK); Hedegaard, Anders, 8660 Skanderborg (DK); Nielsen, Søren Tønnes, 8660 Skanderborg (DK)
(74) Representative: Plougmann Vingtoft a/s

(57) **Abstract**

A battery-operated utility meter for measuring an amount of a liquid delivered from a utility distribution network to a consumption site network. The utility meter comprises a flow tube with an inlet and an outlet for passage of the liquid and a first and a second piezoelectric ultrasonic transducer arranged at the flow tube. A measurement circuit is arranged to transmit and receive ultrasonic signals through the liquid in the flow tube via the piezoelectric ultrasonic transducers and a digital processing unit is arranged for calculating a flow rate of the liquid in the flow tube based on the signals received by the first measurement circuit. The first measurement circuit and the digital processing unit are operated with intervals, to perform a finite duration flow rate measurement. Further, the utility meter includes an analogue second measurement circuit arranged for detecting a pressure transient of the liquid in the flow tube using the first and/or the second piezo electric transducer. The utility meter is arranged to continuously operate the second measurement circuit in a time period in between two adjacent finite duration flow rate measurements, to perform an intermediate pressure transient detection having a duration which is longer than the duration of the finite duration flow rate measurements.

## Description

### FIELD OF THE INVENTION

The present invention relates to the technical field of utility meters for measuring an amount of a liquid delivered to a consumer, more specifically to the field of utility meters with ultrasonic flow measurement.

### BACKGROUND OF THE INVENTION

Pressure transients in utility distribution networks, such as water or district heating distribution networks are unwanted incidents that can damage pipe infrastructure and lead to pipe failures. Effective detection of pressure transients can support modern utility companies in asset management and help them to optimize the lifetime of their distribution infrastructure by minimizing the risk of premature failure.

Pressure transients may arise from regulating pumps, badly controlled valve operation or large sudden consumption starts or stops. The pressure transients can be of longer duration in the order of minutes with amplitudes typically not exceeding a few bars. Additionally, the pressure transients can be short events with durations of 10's of milliseconds and amplitudes exceeding 10's of bars.

Especially a pressure transient of short duration with a large amplitude is challenging to monitor due to the short duration of the event. Traditional approaches where the pressure is sampled with the help of pressure sensors require high sample rates in the kilohertz range, which leads to large amounts of data and high energy consumption. This is incompatible with e.g. water meters powered by a battery and transmitting only minimal data via radio. Utility meters especially water meters and district heating meters are typically battery-powered devices, and consequently have a finite amount of energy available for their operation. Due to a lifetime for a utility meter of typically 10-20 years, without a battery replacement, energy conservation is a major design criterion. Typically, only slow pressure changes or absolute pressure are monitored by pressure sensors embedded in utility meters.

Dedicated fast pressure transient detectors, which are not embedded in utility meters exist, but these are only deployed sporadically in the utility distribution network due to the considerable cost associated with such sensors and with installation of the sensors. Consequently, the coverage of the utility distribution network is often poor, and the detection of pressure transients is insufficient. Especially the limited number of pressure transient detectors in the utility distribution network makes it difficult to determine the origin of pressure transients.

Hence, an improved method and means for detection and location of fast pressure transients in a utility distribution network, and in particular more efficient and cost-efficient means and methods would be advantageous.

### OBJECT OF THE INVENTION

In particular, it may be seen as an object of the present invention to provide a utility meter and a method that solves the above-mentioned problems of the prior art. Further, it is an object of the present invention to provide a low-cost, low-power utility meter, a method and a system for surveillance of pressure transients occurring in a utility distribution network. It is a further object to determine an origin of detected pressure transients.

### SUMMARY OF THE INVENTION

Thus, the above described object and several other objects are intended to be obtained in a first aspect of the invention by providing a utility meter for measuring an amount of a liquid delivered from a utility distribution network to a consumption site network, said utility meter comprising: a flow tube comprising an inlet and an outlet for passage of the liquid between the utility distribution network and the consumption site network; at least a first and a second piezoelectric ultrasonic transducer arranged at the flow tube; a first measurement circuit arranged to transmit and receive ultrasonic signals through the liquid in the flow tube via the piezoelectric ultrasonic transducers; and a digital processing unit for calculating a flow rate of the liquid in the flow tube based on the signals received by the first measurement circuit, where the utility meter is arranged to operate the first measurement circuit and the digital processing unit with regular or irregular time intervals, to perform a finite duration flow rate measurement of the liquid in the flow tube, characterized in that: the utility meter further comprises an analogue second measurement circuit arranged for detecting a pressure transient of the liquid in the flow tube using the first and/or the second piezo electric transducer; and in that the utility meter is arranged to continuously operate the second measurement circuit in a time period in between two adjacent finite duration flow rate measurements, to perform an intermediate pressure transient detection having a duration which is longer than the duration of the finite duration flow rate measurements.

The utility meter according to the first aspect of the invention is especially advantageous in that it is able to detect short pressure transients while at the same time being battery conserving. The first measurement circuit with a digital processing unit for high precision finite duration flow rate measurements has a high energy consumption whereas the analogue second measurement circuit for continuous pressure transient detection has a low energy consumption. Preferably, the analogue second measurement circuit is arranged for measuring an amplitude or a maximum amplitude of pressure transients. The combination of the two different measurement circuits which are interchangeably activated for different types of measurements with different requirements on precision has the technical effect of saving energy. The digital processing unit and / or the first measurement circuit may be switched off or in a sleep mode while operating the analogue second measurement circuit whereby energy consumption is reduced. Furthermore, the second measurement circuit may be designed to have an energy consumption which is less than 10% of the energy consumption of the digital processing unit and / or the first measurement circuit. The low energy consumption of the second measurement circuit allows continuous operation of the second measurement circuit in between the finite duration flow rate measurements, whereby even very short pressure transients are detected with a limited energy consumption which is required for a battery-operated utility meter.

The duration of the intermediate pressure transient detection is longer than the duration of the finite duration flow rate measurement. More preferably the duration of the intermediate pressure transient detection is at least 10 times or even more preferably 100 times longer than the duration of the finite duration flow rate measurement. In other words: preferably the time period in between two adjacent finite duration flow rate measurements, wherein the utility meter is arranged to continuously operate the second measurement circuit, is longer than the duration of the finite duration flow rate measurement. More preferably the time period in between two adjacent finite duration flow rate measurements, wherein the utility meter is arranged to continuously operate the second measurement circuit, is at least 10 times or even more preferably 100 times longer than the duration of the finite duration flow rate measurement. The duration of the intermediate pressure transient detection may preferably be in the interval of 0,5 seconds to 5 seconds. The finite duration flow rate measurement may be performed with an interval in the range from 0,5 seconds to 5 seconds. The duration of the finite duration flow rate measurement may preferably be in the range of 1 - 20 milli seconds. In other words the intermediate pressure transient detection has a duration which is longer than the duration of the finite duration flow rate measurement. Further, the reuse of the piezoelectric ultrasonic transducers for intermediate pressure transient detection in between the finite duration flow rate measurements is advantageous in that no cost of an additional pressure sensor in the utility meter is required.

Optionally the second measurement circuit in the utility meter according to the first aspect is further arranged to measure a pressure transient amplitude and generate and hold an analogue output signal proportional to a maximum pressure transient amplitude measured during said time period. Measuring a pressure transient amplitude alone has the advantage that this can be implemented by an analogue circuit having a low energy consumption. Optionally the utility meter is not arranged to measure a pressure transient duration and/or an intensity and/or a power of the pressure transient. It is especially advantageous to hold and output an analogue output signal corresponding to the transient amplitude by the analogue second measurement circuit in that the maximum transient in that way is temporarily stored by the analogue circuit and then may be digitalized at a later stage when the digital processing unit is active. Thus, there is no need for activating the digital processing unit at the time of the pressure transient or each time a pressure transient occurs in that the maximum pressure transient amplitude is held by the second measurement circuit, whereby energy is conserved, and battery lifetime improved. Consequently, it is only needed to activate the digital processing unit at the time intervals for finite duration flow rate measurement. In general analogue circuits may be designed to have a very low energy consumption and the analogue hold circuit may be designed to detect even very short pressure transients. Sampling and digital signal processing of the pressure measurements with a sampling rate sufficient for detection of short pressure transients would require a significantly higher energy consumption. Optionally the second measurement circuit may comprise a peak detector for measuring the maximum amplitude of pressure transients.

Optionally the utility meter is arranged to make an analogue to digital conversion of said analogue output signal at the end of said time period. The utility meter or the digital processing unit may comprise an analogue to digital converter for digitizing the analogue output signal from the second measurement circuit. The digitized output may be stored in a memory for analysis purposes. Only digitizing the analogue output signal from the second measurement circuit at the end of the time period of continuously operating the second measurement circuit is advantageous in that energy is conserved. The digitized output may then be compared to a threshold by the digital processing unit and in case the threshold is exceeded a pressure transient detection event may be generated. Optionally the pressure transient event may be time stamped and stored in a memory of the utility meter. Further, the maximum amplitude of the pressure transient event may be stored. Optionally the utility meter comprises a communication interface for transmitting consumption data to a head end system via a data reading system. The pressure transient event may be transmitted to the head end system via the communication interface. Optionally the utility meter may comprise a logger or data base wherein pressure transient detection events are stored.

Optionally the second measurement circuit may further comprise a reset circuit arranged to reset or clear the analogue output signal and the utility meter may be arranged to operate the reset circuit at the beginning and/or the end of said time period. Since a pressure transient is a change of pressure, it advantageous to detect the pressure transient as the change of pressure during the time period of operating the second measurement circuit. Resetting the analogue at the start or end of said time period has the effect that a new pressure baseline is set for a following intermediate pressure transient detection. Preferably the analogue output is analogue to digital converted before it is reset or cleared.

Optionally the utility meter is arranged to determine an origin of a pressure transient, where said origin is determined to be the utility distribution network or the consumption site network, based on at least a set of two adjacent finite duration flow rate measurements in between which the intermediate pressure transient detection is performed. The origin of a pressure transient is to be understood as an area, a location or part of a network from where the pressure transient originates. The origin is not to be understood as the cause of a pressure transient. Pressure transients are caused by many different events such as regulating pumps or opening or closing of valves. Determining the origin of the pressure transient to be the utility network or the consumption site network is to be understood as determining that the cause of the pressure transient is located in the distribution network or in the consumption site network. Optionally the utility meter is arranged to determine an origin of a pressure transient, where said origin is determined to be the utility distribution network or the consumption site network, based on at least a set of two adjacent finite duration flow rate measurements in between which the intermediate pressure transient detection is performed and on one or more finite duration flowrate measurements preceding and/or succeeding the two adjacent finite duration flow rate measurements.

Optionally the origin may be determined to be the distribution network when / in case that both of said adjacent finite duration flow rate measurements result in a flow rate of 0 or when / in case an absolute value of a difference of said adjacent finite duration flow rate measurements is 0 or below a first threshold. Further, the origin may be determined to be the consumption site network when / in case the absolute value of a difference between said adjacent finite duration flow rate measurements is larger than 0 or above a second threshold. This method of determining the origin has the advantage over alternative timing-based methods that there is no need for determining the timing or duration of the pressure transient and the method may be performed using only one piezo electric ultrasonic transducer, whereby the implementation becomes simple and the energy consumption is kept low. In the timing-based methods two piezo electric ultrasonic transducers are used and the time of arrival of the pressure transient is determined by the digital processing unit for both transducers whereafter the origin of the pressure transient may be determined; this requires that the signals from the piezo electric ultrasonic transducer are continuously monitored or sampled by the digital processing unit which will increase energy consumption of the utility meter. The term absolute value shall be understood in the mathematical sense as the value of the difference without a sign. Consequently the absolute value (or modulus) |x| of a difference of said adjacent finite duration flow rate measurements is the non-negative value of said difference without regard to its sign. An absolute value shall in this context not be understood as an absolute pressure measurement. In other words the origin may be determined to be the distribution network when / in case both of said adjacent finite duration flow rate measurements result in a flow rate of 0 or when / in case a change in flow rate between said adjacent finite duration flow rate measurements is 0 or below a first threshold and/or the origin may be determined to be the consumption site network when / in case a change in flow rate between said adjacent finite duration flow rate measurements is larger than 0 or above a second threshold. This means that the origin may be determined to be the distribution network if both of said adjacent finite duration flow rate measurements result in a flow rate of 0 or if a change in flow rate between said adjacent finite duration flow rate measurements is 0 or below a first threshold and/or the origin may be determined to be the consumption site network if a change in flow rate between said adjacent finite duration flow rate measurements is larger than 0 or above a second threshold

Optionally the first measurement circuit and/or the second analogue measurement circuit are electrically connectable to the piezoelectric ultrasonic transducers via one or more electrical switches and the utility meter is arranged to disconnect the second measurement circuit from the piezoelectric ultrasonic transducers when operating the first measurement circuit to perform a finite duration flow rate measurement and/or to disconnect the first measurement circuit from the piezoelectric ultrasonic transducers when operating the second measurement circuit to perform an intermediate pressure transient detection. Further, the utility meter may be arranged to switch of an energy supply to the first and/or second measurement circuit.

Optionally the first measurement circuit is an analogue measurement circuit, and the utility meter comprises an analogue to digital converter arranged to convert/sample an analogue signal received from the first analogue measurement circuit to a digital signal, and the digital processing unit is arranged to calculate the flow rate of the liquid in the flow tube based on said digital signal. Calculating the flow by digital signal processing is advantageous in that a precise and stable flow rate measurement can be more readily obtained by including a digital calibration.

Optionally the analogue second measurement circuit is arranged for using both the first and the second piezoelectric ultrasonic transducer for detecting a pressure transient. The fist and the second piezoelectric ultrasonic transducers may be used simultaneously by the analogue second measurement circuit for detecting a pressure transient. Optionally the first and the second piezoelectric ultrasonic transducers are opposite polarized. The analogue second measurement circuit may be arranged to determine if the pressure transient is positive or negative based on signals received via opposite polarized piezoelectric ultrasonic transducers.

A pressure transient is understood as a rise or decrease in pressure. Pressure transients may also be known as a water hammer or a pressure surge. Pressure transient detection is to be understood as detection of a pressure change of the liquid in the flow tube. Consequently, no absolute pressure measurement is required. The analogue second measurement circuit detects a change in pressure which is defined as a pressure transient.

The consumption site network may be any network or piping installation at a consumer site such as the piping of a residential house or a larger piping network of an industrial consumer. The utility distribution network may be a water or district heating distribution network including main lines and service lines of the distribution network.

The utility meter may be a water meter or district heating meter which is also known as a thermal energy meter.

The piezoelectric ultrasonic transducers being arranged at the flow tube is to be understood as the piezo electric ultrasonic transducers being arranged: on the flow tube especially on an outer surface of the flow tube; or in a reses of the flow tube; or in an opening of the flow tube with a membrane shielding the piezoelectric ultrasonic transducers from the liquid in the flow tube; or in one or more transducer housings mounted on/in/at the flow tube.

In a second aspect the invention relates to a method for detecting a pressure transient by a utility meter comprising a flow tube arranged to interconnect a utility distribution network and a consumption site network and to measure an amount of a liquid flowing between the utility distribution network and the consumption site network, said method comprising the steps of: with regular or irregular time intervals operating: a first and a second piezoelectric ultrasonic transducer arranged at the flow tube, a first measurement circuit and a digital processing unit, to perform a finite duration flow rate measurement of the liquid in the flow tube; and in a time period in between two adjacent finite duration flow rate measurements operating an analogue second measurement circuit, and at least the first or the second piezo electric transducer to perform an intermediate pressure transient detection having a duration which is longer than the duration of the finite duration flow rate measurements.

The method of the second aspect of the invention is understood to have the same advantages as the invention according to the first aspect. Further, the method of the second aspect may be combined with any of the optional elements of the first aspect of the invention.

Optionally the method further comprises a step of operating said second measurement circuit to measure a pressure transient amplitude and generate and hold an analogue output signal proportional to a maximum pressure transient amplitude measured during said time period.

Optionally the method includes a step of making an analogue to digital conversion of the analogue output signal at the end of said time period.

Optionally the method may further comprise a step of resetting or clearing the analogue output signal at the beginning and/or the end of said time period.

Optionally the method includes determining an origin of a pressure transient source, where said origin is determined to be the utility distribution network or the consumption site network, based on at least the two adjacent finite duration flow rate measurements in between which the intermediate pressure transient detection is performed.

Optionally said origin is determined to be the distribution network when both of said adjacent finite duration flow rate measurements results in a flow rate of 0 or when an absolute value of a difference of the adjacent finite duration flow rate measurements is 0 or below a first threshold and / or wherein said origin is determined to be the consumption site network when an absolute value of a difference between the adjacent finite duration flow rate measurements is larger than 0 or above a second threshold.

Optionally the method includes electrically disconnecting the second measurement circuit from the piezoelectric ultrasonic transducers when operating the first measurement circuit to perform a finite duration flow rate measurement and / or a step of disconnecting the first measurement circuit from the piezoelectric ultrasonic transducers when operating the second measurement circuit to perform an intermediate pressure transient detection.

The method may further comprise a step of converting an analogue signal received from the first measurement circuit to a digital signal and calculating by the digital processing unit the flow rate of the liquid in the flow tube based on the digital signal.

In a third aspect the invention relates to a pressure transient detection system comprising: a plurality of utility meters according to the first aspect of the invention including any optional features, arranged to interconnect a utility distribution network and a plurality of consumption site networks, where the utility meters further include a wireless communication interface arranged for transmitting information about a detected pressure transient; a head end system; and a meter reading infrastructure arranged for wirelessly receiving information about a detected pressure transient transmitted from the plurality of utility meters and for forwarding said information to the head end system, wherein the head end system is arranged for correlating information about detected pressure transients received from at least two of the plurality of utility meters to determine an origin of a pressure transient.

The system of the third aspect of the invention is understood to have the same advantages as the invention according to the first and the second aspect. Further, the system of the third aspect may be combined with any of the optional elements of the first aspect of the invention.

The first aspect of the invention enables the implementation of a low-cost, low-power pressure transient detector in a utility meter. By deploying a plurality of said utility meters to interconnect a utility distribution network and a plurality of consumption site networks, surveillance of pressure transients occurring in a utility distribution network with wide coverage can be realized.

A system including a plurality of utility meters with an embedded pressure transient detector has an advantage over a system with dedicated stand-alone pressure transient detectors in that the utility meters are typically installed at all connections between the utility distribution network and consumption sites networks. Hereby a widespread detection of pressure transients is achieved without installing a high number of stand-alone pressure transient detectors. Furthermore, an origin of a pressure transient may be determined with an improved certainty by correlation of information about detected pressure transients from a plurality of utility meters.

Optionally the head end system is arranged to receive data about the location of the plurality of utility meters and / or information about lengths and connections of pipes of the utility distribution network and to use this information for determining a location of said origin.

The individual aspects of the present invention may each be combined with any of the other aspects. These and other aspects of the invention will be apparent from the following description with reference to the described embodiments.

### BRIEF DESCRIPTION OF THE FIGURES

The utility meter, method and system according to the invention will now be described in more detail with regard to the accompanying figures. The figures show one way of implementing the present invention and is not to be construed as being limiting to other possible embodiments falling within the scope of the attached claim set.
Figure 1 is a utility supply system;
figure 2 is a utility meter in the form of a water meter;
figure 3 is an illustration of the timing of the finite duration flow rate measurements and the intermediate pressure transient detection;
figure 4 illustrates an embodiment of a method for detecting pressure transients by a battery supplied utility meter; and
figure 5 shows the response of a piezo electric transducer to a pressure transient and the corresponding output of the second measurement circuit.

### DETAILED DESCRIPTION OF AN EMBODIMENT

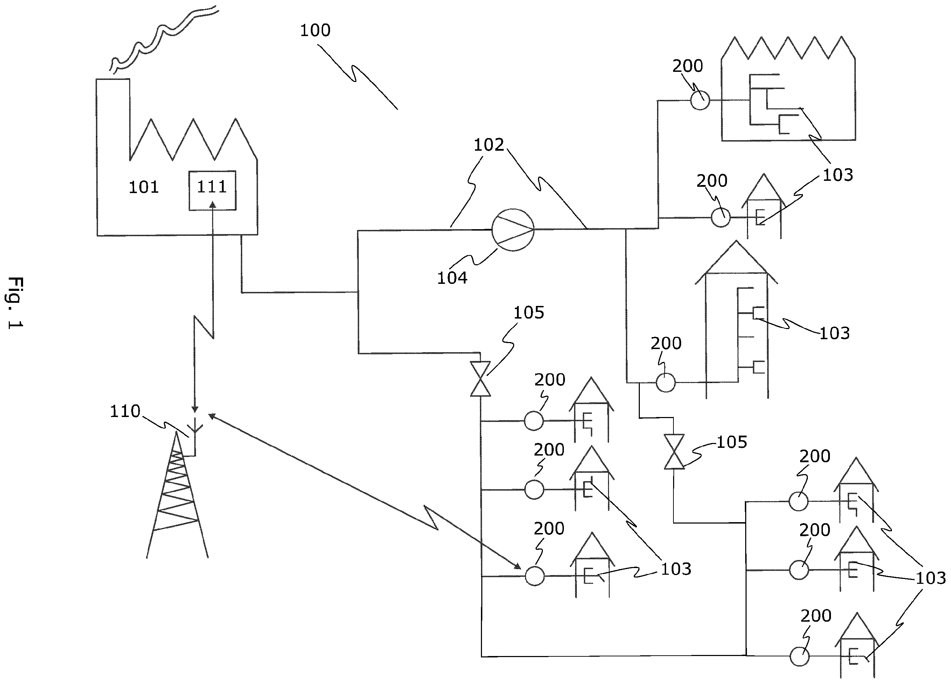

Referring to fig. 1 a utility supply system 100 is illustrated. The system includes a utility plant 101, supplying a utility such as water or district heating in form of thermal energy carried by a liquid e.g. water, via pipes of a utility distribution network 102 to a plurality of consumption site networks 103. The liquid passes through pumps 104 and valves 105 when propagating through the utility distribution network. Regulation of the pumps 104 and opening or closing of valves 105 may generate pressure transients, which are undesired events and may damage or deteriorate the utility distribution network. The consumption site network typically also includes valves, which when opened or closed may cause pressure transients in the liquid flowing in the utility distribution network. The utility distribution network is connected to the consumption site network via a utility meter 200, such as a water meter or a district heating meter / thermal energy meter. The utility meter 200 is arranged to measure the amount of liquid delivered from the utility distribution network 102 to the consumption site network 103. The utility meters 200 are arranged to detect pressure transients generated in the utility distribution network 102 or consumption site network 103 and optionally to transmit information about detected pressure transients to a head end system 111 via a meter reading infrastructure 110.

In the case of a district heating utility supply system the distribution network 102 and consumption side network 103 will include forward and return pipes (not shown). For simplicity this description only refers to the utility distribution network and a single pipe, but it is to be understood as including forward and/or return pipes in a district heating distribution network. Further, in a district heating distribution network the flow may be measured in the forward pipe or the return pipe or in both pipes.

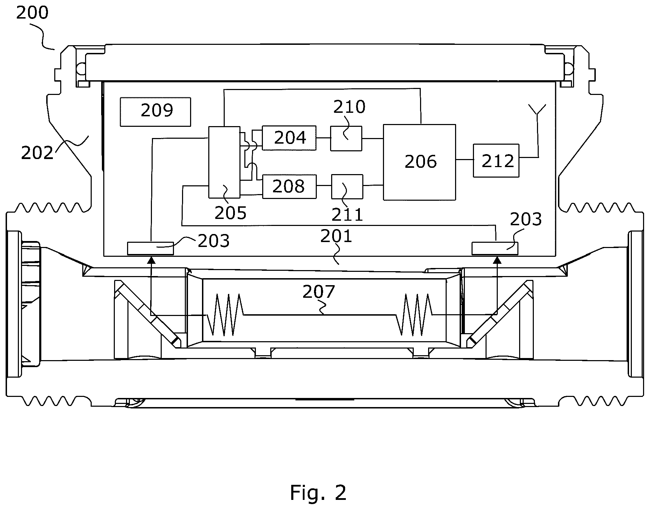

Now referring to fig. 2 a utility meter 200 in the form of an ultrasonic water meter is described. The utility meter 200, comprises a flow tube 201 which may have threads or flanges for connection of the flow tube 201 to a utility distribution network 102 and a consumption site network 103 so that liquid can flow between the two networks. The utility meter comprises a closed meter housing 202 attached to the flow tube 201. Two piezo electric ultrasonic transducers 203 are arranged inside the meter house 202 on a wall of the flow tube 201 which passes through the meter housing. The piezoelectric ultrasonic transducers 203 are electrically connected to a first measurement circuit 204 via one or more switches 205 controlled by a digital processing unit 206. The digital processing unit 206 controls the first measurement circuit 204 to transmit ultrasonic signals 207 through a wall of the flow tube 201 into the liquid in the flow tube and to receive ultrasonic signals 207 having propagated through the liquid. Based on transit time or phase difference measurements of the ultrasonic signals 207 propagating through the liquid, the digital processing unit 206 can calculate the flowrate of the liquid. The ultrasonic signals are received via a first measurement circuit 204 and sampled with a sufficiently high sampling rate and converted to digital signals by a first analogue to digital converter 210 before they are processed by the digital processing unit for calculating the flow rate.

The piezoelectric ultrasonic transducers 203, the switches 205, the first and the second measurement circuit 204, 208, the analogue to digital converters 210, 211, the digital processing unit 206, the communication interface 212, the battery 209 and other electronic components of the utility meter are arranged inside the meter housing 202, which protects them from the environment, especially form humidity in the environment. The utility meter is supplied with energy by the battery 209 arranged inside the meter housing.

The piezo electric ultrasonic transducers 203 which are attached to a wall of the flow tube 201 will be subject to a change in strain when a pressure transient occurs in the liquid flowing in flow tube. The pressure transient in the liquid will deform the flow tube and the piezo electric ultrasonic transducers attached to it. As an alternative, the piezo electric transduces may be arranged in or at a trough going hole in a wall of the flow tube, in that case the transducers are protected from the liquid in the flow tube by a membrane or a transducer housing, changes in pressure of the liquid in the flow tube will in that case deform the membrane or transducer housing whereby the piezo electric transducers are subject to a change in strain. The piezo electric ultrasonic transducers 203 may be glued to the flow tube 201 or membrane and/or be mechanically pressed against the flow tube or membrane e.g. by a spring load. The change in strain of the piezo electric ultrasonic transducer 203 will result in an electrical charge 502 being build up on the piezoelectric ultrasonic transducers. The charge on the piezoelectric ultrasonic transducers will be indicative of the pressure transient amplitude. The piezoelectric ultrasonic transducers 203 are electrically connected to a second measurement circuit 208 via the one or more switches 205 controlled by the digital processing unit 206. The second measurement circuit is arranged to detect a change in electrical charge and thereby detect a pressure transient.

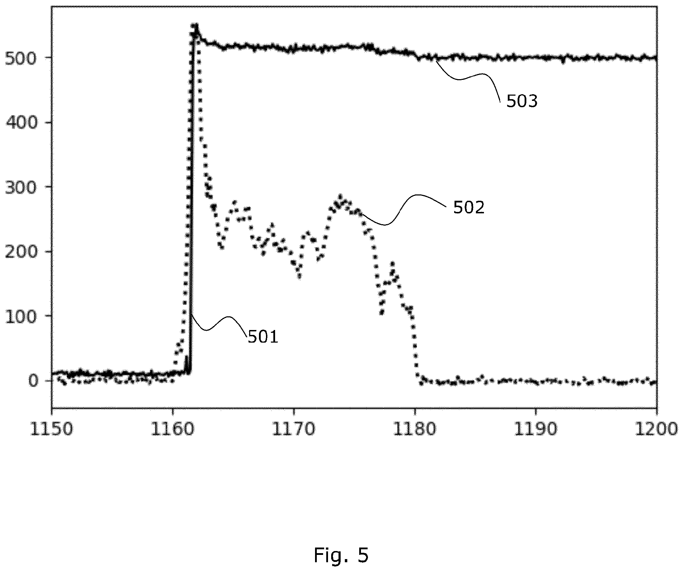

The second measurement circuit 208 may be constructed using an operational amplifier to implement a voltage amplifier with a high input impedance or alternatively a charge amplifier. The second measurement circuit may be based on a commercially available operational amplifier such as the TLV8802 from Texas Instruments. Optionally the second measurement circuit includes a hold circuit such as a peak detector for generating an analogue output signal indicative of the maximum pressure amplitude. The second measurement circuit generates and holds an analogue output signal 501 indicative of or proportional to the maximum pressure transient amplitude measured. Fig. 5 illustrates the analogue output signal 501 from the second measurement circuit 208 and the charge 502 build-up on the piezo electric ultrasonic transducer 203 in response to a pressure transient. On the abscissa is plotted the time in milli seconds and on the ordinate is plotted the charge 502 on the piezoelectric ultrasonic transducers and a corresponding output signal 501 from the analogue second measurement circuit. As can be seen from fig. 5 the maximum amplitude 503, which is indicative of a pressure transient, is held by the second analogue measurement circuit even after the strain of the piezo electric transducer is no longer present and the resulting charge has diminished. The value of the analogue output signal 501 may be digitized by a second analogue to digital converter 211 to have a digital representation of the output value. Alternatively the first analogue to digital converter 210 may be reused. Further, the second analogue measurement circuit includes a reset circuit for resetting or clearing the analogue output signal to a predefined value. When resetting the second measurement circuit the current pressure in the flow tube will become a new base line for detection of pressure transients.

In a variation of the embodiment of the utility meter the analogue second measurement circuit is arranged for using both the first and the second piezoelectric ultrasonic transducer simultaneously for detecting a pressure transient. In the case that the first and the second piezoelectric ultrasonic transducers are opposite polarized the analogue second measurement circuit may determine if the pressure transient is positive or negative based on signals received via the opposite polarized piezoelectric ultrasonic transducers.

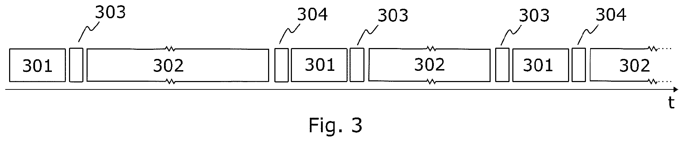

Referring also to fig. 3 the timing of operating the measurement circuits 204, 208 is now described. The utility meter 200 is arranged to operate the first measurement circuit 204 to do a finite duration flow rate measurement 301 of the flow rate of the liquid in the flow tube 201 with regular or irregular intervals. A typical interval for finite duration flow rate measurement 301 in a water meter is typically 0.5-5 seconds. Especially thermal energy meters may use longer intervals for the flow rate measurements 301. In the time period in between two finite duration flow rate measurements 301 an intermediate pressure transient detection 302 is made. When finishing a finite duration flow rate measurement 301 the utility meter operates the switches 205 to disconnect the first measurement circuit 204 and connect the second 208 measurement circuit to the piezoelectric ultrasonic transducers 203. Further, the first measurement circuit is powered down or put in a low power mode to reduce energy consumption. Before starting the intermediate pressure transient detection 302 the second measurement circuit is reset 303 so that the present pressure in the flow tube will be a new baseline for pressure transient detection. Before the next finite duration flow rate measurement 301 the analogue output of the second measurement circuit is digitized 304 whereby a digital representation of the output value is obtained. The digital representation may be stored in a memory of the digital processing unit. At the end of the intermediate pressure transient detection or after digitizing the output value of the analogue second measurement circuit 208 the utility meter operates the switches 205 to connect the first measurement circuit to 204 and disconnect the second 208 measurement circuit from the piezoelectric ultrasonic transducers. Due to the low energy consumption of the analogue second measurement circuit the overall energy consumption is kept low. Preferably the first measurement circuit is switched off or made powerless when operating the second measurement circuit and vice versa. As seen from fig. 3 the time periods of the intermediate pressure transient detection 302 are longer than the time periods of finite duration flow rate measurements. It is noted that fig. 3 is out of scale for illustrative purposes and that the duration of the intermediate pressure transient detection are much longer than time periods for finite duration flow rate measurements. A finite duration flow rate measurement will typically have a duration of 1- 20 milli seconds whereas the duration of the intermediate pressure transient detection typically will be in the range of 0.5 - 5 seconds.

The utility meter 200 is arranged to determine an origin of a detected pressure transient by analysing at least two adjacent finite duration flow rate measurements 301 in between which the pressure transient is detected. The digital processing unit 206 includes a SW algorithm which subtracts the value of the adjacent finite duration flow rate measurements and based on the result determines the origin of the detected pressure transient. Pressure transients having an origin in the consumption site network 103 are typically related to changes in consumption e.g. when a tap or valve at the consumer is rapidly opened or closed. Consequently, if a pressure transient detected in a utility meter 200 is coincident with a change in consumption detected by the utility meter the pressure transient is determined to have its origin in the consumption site network 103. On the contrary, if there is no change of consumption the pressure transient has most likely reached the utility meter 200 via the utility distribution network 102 and in that case the origin of the pressure transient is determined to be in the utility distribution network.

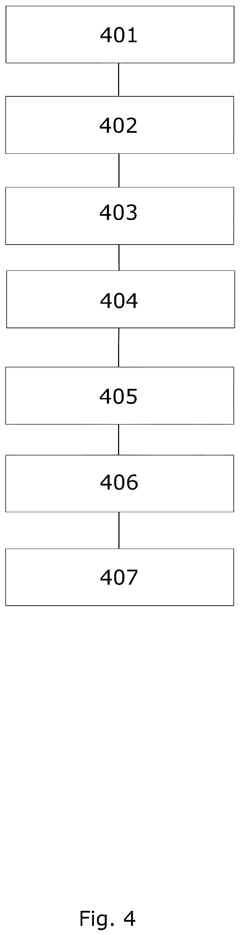

Fig. 4 illustrates an embodiment of a method for detecting pressure transients by a battery supplied utility meter 200 as illustrated in fig. 2. The method is implemented in the digital processing unit of the utility meter and uses the piezoelectric ultrasonic transducers and the first and second measurement circuits. In a first step 401 of the method the first and a second piezoelectric ultrasonic transducers arranged at the flow tube and the first measurement circuit, and the digital processing unit is operated with regular or irregular time intervals to perform a finite duration flow rate measurement of the liquid in the flow tube. In a second step of the method 402 the analogue second measurement circuit, and at least the first or the second piezo electric transducer is operated in a time period in between two adjacent finite duration flow rate measurements of the first step 401 to perform an intermediate pressure transient detection. In a third step of the method 403 the second measurement circuit is operated to measure a pressure transient amplitude and generate and hold an analogue output signal proportional to a maximum pressure transient amplitude measured during said time period. In a fourth step of the method 404 an analogue to digital conversion of the analogue output signal is made at the end of said time period. In a fifth step of the method 405 the analogue output signal is reset or cleared at the beginning and/or the end of said time period. In a sixth step of the method 406 an origin of a pressure transient source is determined to be the utility distribution network or the consumption site network, based on at least the two adjacent finite duration flow rate measurements in between which the intermediate pressure transient detection is performed. The two adjacent finite duration flow rate measurements are subtracted to determine the origin as described above. In a seventh step of the method 407 the second measurement circuit is electrically disconnected from the piezoelectric ultrasonic transducers when operating the first measurement circuit to perform a finite duration flow rate measurement and / or first measurement circuit is disconnected from the piezoelectric ultrasonic transducers when operating the second measurement circuit to perform an intermediate pressure transient detection.

As described above fig. 1 discloses an embodiment of a pressure transient detection system with a plurality of utility meters 200 as described with reference to fig. 2. The utility meters are arranged to interconnect a utility distribution network 102 and a plurality of consumption site networks 103. The utility meters include a wireless communication interface 212 arranged for transmitting information about a detected pressure transient to a head end system. The wireless communication interface 212 is implemented according to a communication protocol in order to interface a meter reading infrastructure arranged for wirelessly receiving information about a detected pressure transients from the plurality of utility meters. The communication wireless interface 212 and meter reading infrastructure 110 may be implemented according to a proprietary communication protocol or a standardized protocol such as wireless MBus EN13757, LoRa WAN, Bluetooth, Zigbee or cellular communication infrastructures such as NB-IOT, LTE cat. NB or cat. M. The information about detected pressure transients is forwarded to a head end system 111, which is arranged for correlating information about detected pressure transients received from at least two of the plurality of utility meters to determine an origin of a pressure transient. The information about the detected pressure transients may include detailed event information such as the amplitude, duration and absolute or relative time of the pressure transient event. Optionally the head end system is arranged to receive geographical and topology information about the utility distribution network and to include this information in the analysis of and correlation of the information about the pressure transients whereby the determination of the origin of a pressure transient is improved. The head end system 111 is implemented in a server or a computer system controlled by the utility company and the results of the correlation are presented to a user of the system in a table or on a GIS map showing also the utility distribution network.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A utility meter (200) for measuring an amount of a liquid delivered from a utility distribution network (102) to a consumption site network (103), said utility meter comprising:
- a flow tube (201) comprising an inlet and an outlet for passage of the liquid between the utility distribution network (102) and the consumption site network (103);
- at least a first and a second piezoelectric ultrasonic transducer (203) arranged at the flow tube (201);
- a first measurement circuit (204) arranged to transmit and receive ultrasonic signals (207) through the liquid in the flow tube (201) via the piezoelectric ultrasonic transducers (203);
- a digital processing unit (206) for calculating a flow rate of the liquid in the flow tube based on the signals received by the first measurement circuit (204); and
- a battery (209) for energy supply,
where the utility meter is arranged to operate the first measurement circuit (204) and the digital processing unit (206) with regular or irregular time intervals, to perform a finite duration flow rate measurement (301) of the liquid in the flow tube (201),
**characterized in that**:
the utility meter (200) further comprises an analogue second measurement circuit (208) arranged for detecting a pressure transient of the liquid in the flow tube (201) using the first and/or the second piezo electric transducer (203); and
**in that** the utility meter is arranged to continuously operate the second measurement circuit (208) in a time period in between two adjacent finite duration flow rate measurements (301), to perform an intermediate pressure transient detection (302) having a duration which is longer than the duration of the finite duration flow rate measurements (301).

2. A utility meter according to claim 1 wherein said second measurement circuit (208) further is arranged to measure a pressure transient amplitude and generate and hold an analogue output signal (501) proportional to a maximum pressure transient amplitude measured during said time period.

3. A utility meter according to claim 2 wherein the utility meter further is arranged to make an analogue to digital conversion of said analogue output signal at the end of said time period.

4. A utility meter according to claim 2 or 3 wherein the second measurement circuit (208) further comprises a reset circuit arranged to reset or clear the analogue output signal and wherein the utility meter is arranged to operate the reset circuit at the beginning and/or the end of said time period.

5. A utility meter according to any of the preceding claims wherein the utility meter further is arranged to determine an origin of a pressure transient, where said origin is determined to be the utility distribution network (102) or the consumption site network (103), based on at least a set of two adjacent finite duration flow rate measurements (301) in between which the intermediate pressure transient detection (302) is performed.

6. A utility meter according to claim 5 wherein said origin is determined to be the distribution network (102) when both of said adjacent finite duration flow rate measurements (301) results in a flow rate of 0 or when an absolute value of a difference of said adjacent finite duration flow rate measurements (301) is 0 or below a first threshold and / or wherein said origin is determined to be the consumption site network (103) when the absolute value of a difference between said adjacent finite duration flow rate measurements (301) is larger than 0 or above a second threshold.

7. A utility meter according to any of the preceding claims wherein the first measurement circuit (204) and / or the second analogue measurement circuit (208) is/are electrically connectable to the piezoelectric ultrasonic transducers (203) via one or more electrical switches (205) and wherein the utility meter is arranged to disconnect the second measurement circuit (208) from the piezoelectric ultrasonic transducers (203) when operating the first measurement circuit (204) to perform a finite duration flow rate measurement (301) and / or to disconnect the first measurement circuit (204) from the piezoelectric ultrasonic transducers (203) when operating the second measurement circuit (208) to perform an intermediate pressure transient detection (302).

8. A method for detecting a pressure transient by a battery supplied utility meter comprising a flow tube arranged to interconnect a utility distribution network and a consumption site network and to measure an amount of a liquid flowing between the utility distribution network and the consumption site network, said method comprising the steps of:
- with regular or irregular time intervals operating: a first and a second piezoelectric ultrasonic transducer arranged at the flow tube, a first measurement circuit and a digital processing unit, to perform a finite duration flow rate measurement of the liquid in the flow tube (401); and
- in a time period in between two adjacent finite duration flow rate measurements operating an analogue second measurement circuit, and at least the first or the second piezo electric transducer to perform an intermediate pressure transient detection (402) having a duration which is longer than the duration of the finite duration flow rate measurements (301).

9. A method according to claim 8, further comprising a step of: operating said second measurement circuit to measure a pressure transient amplitude and generate and hold an analogue output signal proportional to a maximum pressure transient amplitude measured during said time period (403).

10. A method according to claim 9, further comprising a step of: making an analogue to digital conversion of the analogue output signal at the end of said time period (404).

11. A method according to claim 9 or 10, further comprising a step of: resetting or clearing the analogue output signal at the beginning and/or the end of said time period (405).

12. A method according to any of claims 8-11, further comprising a step of: determining an origin of a pressure transient source, where said origin is determined to be the utility distribution network or the consumption site network, based on at least the two adjacent finite duration flow rate measurements in between which the intermediate pressure transient detection is performed (406).

13. A method according to claim 12, wherein said origin is determined to be the distribution network when both of said adjacent finite duration flow rate measurements results in a flow rate of 0 or when an absolute value of a difference of the adjacent finite duration flow rate measurements is 0 or below a first threshold and / or wherein said origin is determined to be the consumption site network when an absolute value of a difference between the adjacent finite duration flow rate measurements is larger than 0 or above a second threshold.

14. A method according to any claims 8-13, further comprising a step of: electrically disconnecting the second measurement circuit from the piezoelectric ultrasonic transducers when operating the first measurement circuit to perform a finite duration flow rate measurement and / or a step of disconnecting the first measurement circuit from the piezoelectric ultrasonic transducers when operating the second measurement circuit to perform an intermediate pressure transient detection (407).

15. A pressure transient detection system (100) comprising;
- a plurality of utility meters (200) according to any one of claims 1-11, arranged to interconnect a utility distribution network (102) and a plurality of consumption site networks (103), where said utility meters further include a wireless communication interface (212) arranged for transmitting information about a detected pressure transient;
- a head end system (111); and
- a meter reading infrastructure (110) arranged for wirelessly receiving information about a detected pressure transient transmitted from the plurality of utility meters (200) and for forwarding said information to the head end system (111),
wherein the head end system is arranged for correlating information about detected pressure transients received from at least two of the plurality of utility meters to determine an origin of a pressure transient.
